# EUROPEAN PATENT APPLICATION

(11) **EP 4 726 448 A1**
(43) Date of publication of application: **15.04.2026**
(21) Application number: 25197103.2
(22) Date of filing: 20.08.2025
(51) Int. Cl.: G02B 6/38

(54) **CONVERTER UNIT FOR A HARDENED CONNECTOR**

(30) Priority: 10.10.2024 IN 202411077098
(71) Applicant: Sterlite Technologies Limited, Gurugram, Haryana 122102 (IN)
(72) Inventor: Wang, Wayne, Shenzhen City, Guangdong Province, 518126 (CN); Gopi, Ajayakumar, 122102 Gurugram, Haryana (IN); Vinod, Arjun, 122102 Gurugram, Haryana (IN); Balachandran, Binod, 122102 Gurugram, Haryana (IN)
(74) Representative: Petraz, Gilberto Luigi

(57) **Abstract**

The present disclosure provides a converter unit (100) for convert a hardened connector (50) with small diameter into another hardened connector with large diameter such that the same hardened connector (50) compatible with two different types of fiber terminals i.e. small sized (new generation box) and large sized (old generation box). The converter unit (100) comprises an arrester unit (102) mounted over the small sized hardened connector via threaded lock, a shroud unit (104) coupled to the arrester unit (102) and a coupling nut (108) encapsulated over the shroud unit (104) to exhibit rotational and transaction movement over the shroud unit (104). Further, a first end (110) of the coupling nut (108) is restrained by the arrester (104) and a second end (112) of the coupling nut (108) being restricted by a shoulder (106) provided on the shroud unit (104).

## Description

### TECHNICAL FIELD

Embodiments of the present disclosure relate to the field of wireless communication networks of optical fibres, and in particular, relate to a removable converter unit for a hardened connector adapted to connect a hardened connector having a small form factor to an optical fiber terminal having a large form factor.

The present application claims the benefit of Indian Application No. 202411077098 titled "CONVERTER UNIT FOR A HARDENED CONNECTOR" filed by the applicant on October 10, 2024**,** which is incorporated herein by reference in its entirety.

### Background Art

Modern optical devices and optical communications systems widely use fiber optic cables. Fiber optic cables are often used to transmit light signals for high speed data transmission. A fiber optic cable typically includes an optical fiber or optical fibers, a buffer or buffers that surround the fiber or fibers, a strength layer that surrounds the buffer or buffers, and an outer jacket. The optical fibers function to carry optical signals.

Optical fiber refers to the technology and the medium for the transmission of data as light pulses along an ultrapure strand of glass, which is as thin as a human hair. For many years, optical fibers have been extensively used in high-performance and long-distance data and networking.

Telecommunication cables are ubiquitous and used for distributing all manner of data across vast networks. The majority of cables are electrically conductive cables (typically copper), although the use of optical fiber cable is growing rapidly in telecommunication systems as larger and larger amounts of data are transmitted. Additionally, as data transmissions increase, the fiber optic network is being extended closer to the end user which can be a premise, business, or a private residence.

Optical fiber cables utilize optical fibers to transmit signals such as voice, video, image, data or information. Optical fibers are strands of glass fiber processed so that light beams transmitted through the glass fiber are subject to total internal reflection wherein a large fraction of the incident intensity of light directed into the fiber is received at the other end of the fiber.

Fiber optic cables are widely used to transmit light signals for high-speed data transmission. A fiber optic cable typically includes: (1) one or more optical fibers; (2) one or more buffers that surround the one more optical fibers; (3) at least one strengthening layer that surrounds the one mor more buffers; and (4) an outer jacket. Moreover, typical optical fiber includes at least one cylindrical glass region and a polymer region surrounding the at least one cylindrical glass region. The at least one cylindrical glass region comprises at least one core surrounded by a cladding region.

In case the fiber optic cable is to be connected to an optical fiber terminal, there is provided at least one connector at the end of the fiber optic cable. The connector generally includes a ferrule that receives the at least one cylindrical glass region of the at least one optical fiber of the fiber optic cable. The optical fiber terminal includes ports (i.e., receptacles) for receiving the connector. Each port of the optical fiber terminal generally includes an alignment mechanism for aligning the connector in a particular orientation. Only when the ferrule is properly aligned in the port of the optical fiber terminal, an optical signal can pass from the fiber optic cable to the optical fiber terminal. Additionally, the port of the optical fiber terminal comprises a locking mechanism for locking the connector so that the connector does not get inadvertently detached from the port of the optical fiber terminal.

In the existing optical fiber infrastructure, large diameter fiber connectors and larger sized terminal boxes are being used. However, with the advancement in the telecom industry and increase in the number of users, there is a requirement to reduce the size of the infrastructure. Thus, the industry is constantly involved in reducing the form factor (i.e. size) of the hardened connector. However, replacing the entire bigger sized infrastructure with a new small sized infrastructure is not feasible and hence, there is a requirement to develop such a small sized network which is compatible with the existing bigger sized network. This requirement is being fulfilled by a converter unit that can be mounted over a small sized hardened connector and convert the hardened connector into a bigger sized hardened connector. The small sized hardened connector can be coupled to new generation boxes or small sized terminals. The connector and the coupling port of the terminal have smaller sized diameters. The bigger sized hardened connector can be coupled to old generation boxes or bigger sized terminals. The connector and the coupling port of the terminal have a bigger sized diameter.

Prior art reference U.S. Patent No. 11,543,600 B2 which describes a conversion housing for converting a fiber connector from one footprint to another footprint. However, the number of parts of the conversion housing is high, which adversely affects aspects such as cost of the conversion housing, ease of manufacturing the conversion housing, etc. Additionally, when the conversion housing is used, it becomes essential to modify certain internal portions of the hardened connector, for instance, it becomes essential to modify a crimping portion and/or a boot portion of the hardened connector.

Accordingly, to overcome the disadvantages of the prior arts, there is a need for a technical solution to provide a converter unit for a hardened connector adapted to connect a hardened connector having a small form factor to an optical fiber terminal having large form factor to overcome the above-stated limitations in the prior arts.

Therefore, the present disclosure discloses a removable converter unit adapted to connect a hardened connector having a small form factor to an optical fiber terminal having a large form factor.

### SUMMARY OF THE DISCLOSURE

Embodiments of the present disclosure relates to convertor unit for removably engaging an optical fiber hardened connector with an optical fiber terminal. In particular, the convertor unit comprises: an arrester configured to removably engage with an intermediate portion of the optical fiber hardened connector; a shroud unit is configured to removably engage with the arrester such that the optical fiber hardened connector is at least partially encapsulated by the shroud unit. Moreover, the shroud unit comprises a shoulder and the shroud unit is defined by a shroud length and a shroud diameter. Further, the convertor unit comprises a coupling nut slidable over the shroud unit.

The coupling nut is defined by a nut length and a nut diameter. In particular, the nut length is less than the shroud length. Moreover, the nut diameter is greater than the shroud diameter (Ds). Further, a first end of the coupling nut is restrained by the arrester and a second end of the coupling nut is restrained by the shoulder.

According to the first aspect of the present disclosure, the shroud unit being in the form of a first hollow cylindrical element comprising a first inner surface. In particular, the first inner surface comprises a first protruded portion. Further, the first protruded portion being configured to mate with an alignment channel provided on an outer surface of the optical fiber hardened connector, thereby restricting relative rotational movement of the shroud unit and the optical fiber hardened connector.

According to the second aspect of the present disclosure, the shroud unit comprises a plurality of shroud fingers at a front end of the shroud unit. In particular, the plurality of shroud fingers being configured to mate with a plurality of port channel inside the port of the optical fiber terminal, thereby enabling alignment between the convertor unit having the optical fiber hardened connector connected thereto and the port.

According to the third aspect of the present disclosure,the arrester being in the form of a second hollow cylindrical element comprising a second inner surface. Further, the second inner surface comprises a first twist to lock member for removably connecting to a first counter locking member provided on the outer surface of the optical fiber hardened connector.

According to the fourth aspect of the present disclosure,the first counter locking member provided on an outer surface of the optical fiber hardened connector is in form incomplete threads and the first twist to lock member is in form of a second protruded portion that engages with the incomplete threads and provides a twist to lock mechanism

According to the fifth aspect of the present disclosure, the second inner surface of the arrester comprises a second locking member for removably connecting to a second counter locking member provided on a first outer surface of the shroud unit.

According to the sixth aspect of the present disclosure, a method of connecting the convertor unit with the optical fiber hardened connector, comprising removably engaging the arrester with intermediate portion of the optical fiber hardened connector; sliding the coupling nut over the shroud unit; and removably engaging the shroud unit with the arrester such that the optical fiber hardened connector is at least partially encapsulated by the shroud unit and a first end of the coupling nut is restrained by the arrester and a second end of the coupling nut is restricted by the shoulder, thereby connecting the convertor unit with the optical fiber hardened connector.

According to the seventh aspect of the present disclosure, the method of connecting the optical fiber hardened connector having the convertor unit connected thereto to an optical fiber terminal, comprising: inserting the shroud into the port of the optical fiber terminal; aligning the plurality of shroud fingers with the port channel; and connecting the coupling nut with the port of the optical fiber terminal

According to the eighth aspect of the present disclosure,the optical fiber hardened connector is defined by a diameter D1 and to the port is defined by diameter D2, where D1 / D2 is in the range of 0.4 to 0.75.

According to the ninth aspect of the present disclosure, the optical fiber hardened connector comprises a body portion that is tubular hollow portion configured to removably engage with the arrester; a connecting portion configured to removably engage with the body portion; and an optical fiber plug configured to removably engage with the connecting portion at one end, the optical fiber plug is configured to removably engage with the optical fiber terminal through the convertor unit.

The foregoing objectives of the present disclosure are attained by employing a removable converter unit adapted to connect a hardened connector.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating an exploded view of the optical fiber hardened connector in accordance with an embodiment of the present disclosure;
Fig. 2 is a pictorial snapshot illustrating an exploded view of the convertor unit also showing the optical fiber hardened connector having the optical fiber cable connected thereto in accordance with an embodiment of the present disclosure;
Fig. 3 is a pictorial snapshot illustrating a perspective view of the arrester forming part of the convertor unit in accordance with an embodiment of the present disclosure;
Fig. 4 is a pictorial snapshot illustrating a perspective view of the shroud unit forming part of the convertor unit in accordance with an embodiment of the present disclosure;
Fig. 5 is a pictorial snapshot illustrating a perspective view of the convertor unit connected to optical fiber hardened connector and the convertor unit being connected to an optical fiber terminal in accordance with an embodiment of the present disclosure;
Fig. 6 is a pictorial snapshot illustrating a perspective view of a convertor unit connected to optical fiber hardened connector and the optical fiber hardened connector being connected to an optical fiber cable in accordance with an embodiment of the present disclosure;
Fig. 7 is a pictorial snapshot illustrating a flow chart of a process of connecting the convertor unit with the optical fiber hardened connector in accordance with an embodiment of the present disclosure; and
Fig. 8 is a pictorial snapshot illustrating a flow chart of a process of connecting the optical fiber hardened connector having the convertor unit connected thereto to an optical fiber terminal in accordance with an embodiment of the present disclosure.
The optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

Optical fiber- a light guide that provides high-speed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

Hardened Connector: A hardened connector is a type of fiber optic connector specifically designed to provide robust, reliable connections in environments that are subject to harsh conditions. These conditions can include extreme temperatures, moisture, dust, mechanical stress, and other environmental factors that would typically degrade the performance of standard fiber optic connectors. The hardened connector comes in the following forms Hardened SC (H-SC) Connectors, Hardened LC (H-LC) Connectors, and Hardened MPO Connectors.

All technical and scientific terms used herein have the same meaning as commonly understood by one ordinary skilled in the art to which this disclosure belongs. The device, methods, and examples provided herein are illustrative only and not intended to be limiting.

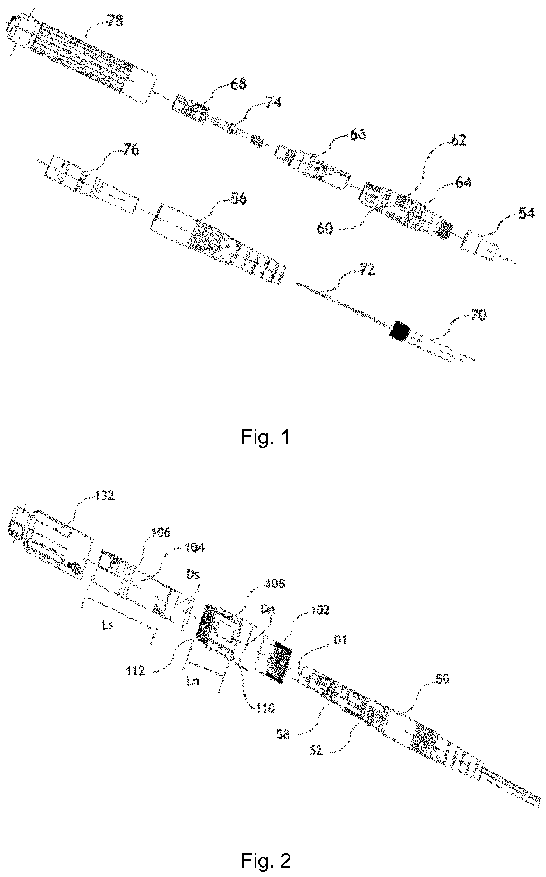

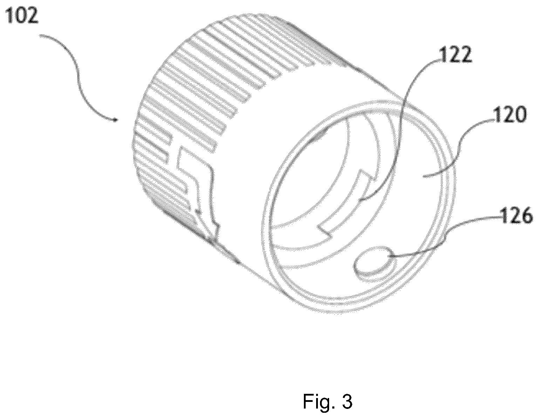

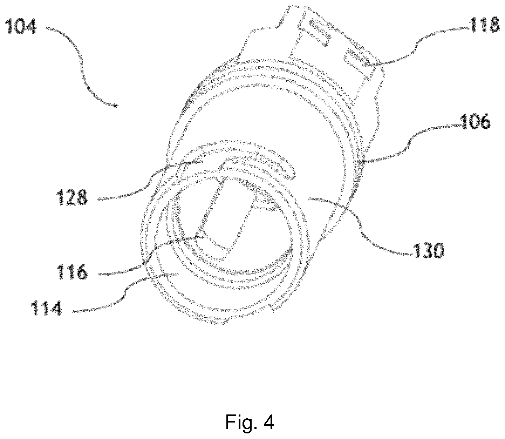

Fig. 1 and Fig. 2 are exploded view of the optical fiber hardened connector and exploded view of the convertor unit also showing the optical fiber hardened connector having the optical fiber cable connected thereto in accordance with an embodiment of the present disclosure. Fig. 3 and Fig. 4 are perspective views of the arrester forming part of the convertor unit and the shroud unit forming part of the convertor unit in accordance with an embodiment of the present disclosure.

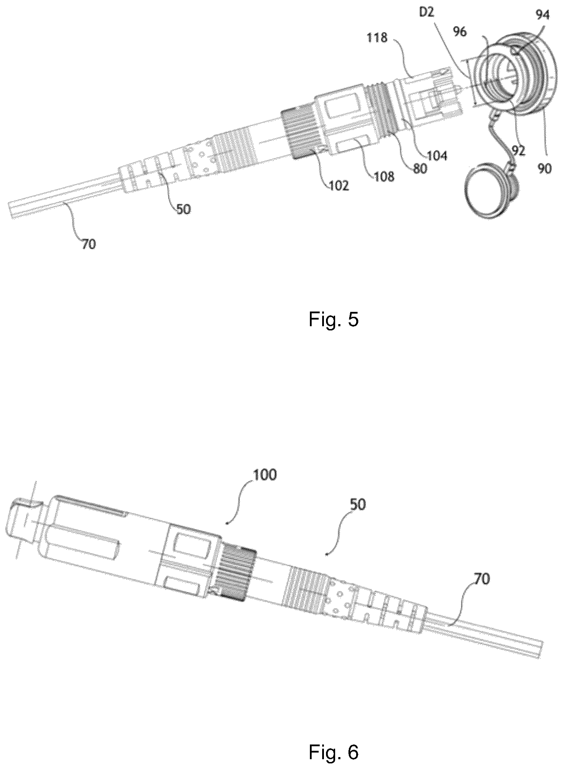

Fig. 5 and Fig. 6 are perspective view of the convertor unit connected to optical fiber hardened connector and the convertor unit being connected to an optical fiber terminal and a perspective view of a convertor unit connected to optical fiber hardened connector and the optical fiber hardened connector being connected to an optical fiber cable in accordance with an embodiment of the present disclosure.

Referring to Fig. 1- Fig. 6, generally, the fiber optic cable (70) includes one or more optical fibers (72) and typically an optical fiber hardened connector (50) is attached to an end of the fiber optic cable (70) for connecting the at least one optical fiber (72) to the optical fiber terminal (90) (best seen in FIg. 5). In particular, the optical fiber terminal (90) comprises a port (92) which receives the optical fiber hardened connector (50), thereby connecting the at least one optical fiber (72) to the optical fiber terminal (90).

Traditionally, the size of the size of the port (92) of the optical fiber terminal (90) is marginally greater than the size of the optical fiber hardened connector (50) such that the optical fiber hardened connector (50) can be directly coupled to the port (92) of the optical fiber terminal (90).

In accordance with an embodiment of the present disclosure, when the size of the optical fiber hardened connector (50) is substantially lesser than the size of the port (92) of the optical fiber terminal (90), there comes an essentially to use a converter unit (100), as shown in Fig. 2.

Referring back to Fig. 1, the optical fiber hardened connector (50) comprises a body portion (64); a connecting portion (66) configured to removably engage with the body portion (64); and an optical fiber plug (68) configured to removably engage with the connecting portion (66) at one end. In particular, the optical fiber plug (68) is configured to removably engage with the optical fiber terminal (90) through the convertor unit (100). Moreover, the optical fiber hardened connector (50) comprises a crimping portion (54) attached to the body portion (64) and function to couple the fiber optic cable (70) to the optical fiber hardened connector (50).Further, the optical fiber hardened connector (50) comprises a boot portion (56) attached to the body portion (64) and surrounding the crimping portion (54) and providing flexibility to the at least one optical fiber (72).

In accordance with an embodiment of the present disclosure, the optical fiber plug (68) in turn comprises a ferrule (74) which terminates the optical fiber (72). Additionally, the optical fiber hardened connector (50) may comprise a heat shrink tube (76) protruding in a rearward direction from the body portion (64). The heat shrink tube (76) may be connected to the body portion (64) and may be adopted to surround a portion of the fiber optic cable (70) proximate to the end which is connected to the optical fiber hardened connector (50).

In accordance with an embodiment of the present disclosure, the optical fiber hardened connector (50) may further a connector cap (78) providing protection to the optical fiber plug (68) part of the optical fiber hardened connector (50).

In accordance with an embodiment of the present disclosure, the optical fiber hardened connector (50) (as shown in Fig. 2) has the optical cable attached thereto and an exploded view of the converter unit (100). Particularly, the converter unit (100) comprises an arrester (102) configured to removably engage with an intermediate portion (52) of the optical fiber hardened connector (50); a shroud unit (104) is configured to removably engage with the arrester (102) such that the optical fiber hardened connector (50) is at least partially encapsulated by the shroud unit (104); and a coupling nut (108) slidable over the shroud unit (104).

In accordance with an embodiment of the present disclosure, the converter unit (100) further comprises a converter unit cap (132) that is releasably attached to the shroud unit (104).

Additionally, the shroud unit (104) and the connector unit (50) includes one or more sealing elements such as but not limited to O-rings for providing environmental sealing between the converter unit (100), the connector unit (50) and the port (92) of the optical fiber terminal (90).

In accordance with an embodiment of the present disclosure, the shroud unit (104) is defined by a shroud length (Ls) and a shroud diameter (Ds), the coupling nut (108) is defined by a nut length (Ln) and a nut diameter (Dn), the nut length (Ln) < shroud length (Ls) and nut diameter (Dn) > shroud diameter (Ds).

In accordance with an embodiment of the present disclosure, the optical fiber hardened connector (50) having the optical cable (50) attached thereto and having the converter unit (100) connected thereto, it can be seen that the converter unit (100) does not disturb either the crimping portion (54) or the boot portion (56) of the optical fiber hardened connector (50).

In accordance with an embodiment of the present disclosure, the shroud unit (104) comprises a shoulder (106). In particular, the coupling nut (108) comprises a first end (110) and a second end (112). Further, the shoulder (106) as provided in the shroud unit (104) restricts the second end (112) of the coupling nut (108) to move there-beyond. Similarly, the arrester (102) restricts the first end (110) of the coupling nut to move there-beyond.

In accordance with an embodiment of the present disclosure, the shroud unit (104) is in the form of a first hollow cylindrical element comprising a first inner surface (114). In particular, the first inner surface (114) comprises a first protruded portion (116) projecting along an axial direction. Moreover, the first protruded portion (116) is configured to mate with an alignment channel (58) provided on at outer surface (60) of the optical fiber hardened connector (50) (best visible in Fig. 1 and Fig. 2), thereby restricting relative rotational movement of the shroud unit (104) and the optical fiber hardened connector (50).

In accordance with an embodiment of the present disclosure, the shroud unit (104) further comprises a plurality of shroud fingers (118) at a front end of the shroud unit (104). In particular, the plurality of shroud fingers (118) project along the axial direction of the shroud unit (104). Moreover, the plurality of shroud fingers (118) being configured to mate with at least one port channel (94) formed inside the inside the port (92) of the optical fiber terminal (90), thereby enabling alignment between the convertor unit (100) having the optical fiber hardened connector (50) connected thereto and the port (92). Further, the inner surface of the optical fiber terminal (90) comprises threaded portion (96) that gets engaged with corresponding threaded portion (80) provided on the coupling nut (108).

In accordance with an embodiment of the present disclosure, the arrester (102) is provided in the form of a second hollow cylindrical element. In particular, the second hollow cylindrical element comprises a second inner surface (120). Moreover, the second inner surface (120) comprises a first twist to lock member (122) for removably connecting to a first counter locking member (62) provided on the outer surface (60) of the optical fiber hardened connector (50) (best visible in Fig. 1). Further, the first counter locking member (62) provided on an outer surface (60) of the optical fiber hardened connector (50) is in form incomplete threads (best visible in Fig. 1) and the first twist to lock member (122) is in form of a second protruded portion that engages with the incomplete threads and provides a twist to lock mechanism.

In accordance with an embodiment of the present disclosure, the second inner surface (120) of the arrester (102) comprises a second locking member (126) and the first outer surface (130) of the shroud unit (104) further comprises a second counter locking member (128). In particular, the second locking member (126) as provided on the second inner surface (120) of the arrester (102) co-operates with the second counter locking member (128) as provided on the first outer surface (130) of the shroud unit

(104), thereby removably connecting the arrester (102) and the shroud unit (104). Further, the second locking member (126) as provided on the second inner surface (120) of the arrester (102) is in the form of a bayonet locking male part and the second counter locking member (128) as provided on the first outer surface (130) of the shroud unit (104) is in the form of a bayonet female part.

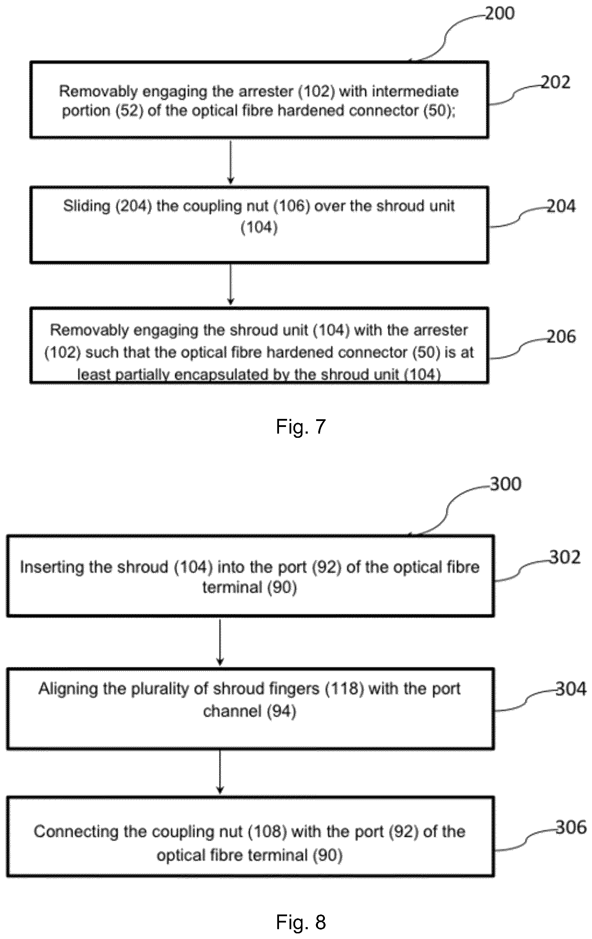

Fig. 7 is a pictorial snapshot illustrating a flow chart of a method (200) of connecting the convertor unit (100) with the optical fiber hardened connector (50). It may be noted that the optical fiber cable (70) and more particularly, one or more optical fibers (72) as present in the optical fiber cable (70) may be connected to the optical fiber hardened connector (50) prior to connecting the convertor unit (100) with the optical fiber hardened connector (50).

The method (200) of connecting the convertor unit (100) with the optical fiber hardened connector (50) comprises steps of removably engaging (202) the arrester (102) with intermediate portion (52) of the optical fiber hardened connector (50), sliding (204) the coupling nut (106) over the shroud unit (104), removably engaging (206) the shroud unit (104) with the arrester (102) such that the optical fiber hardened connector (50) is at least partially encapsulated by the shroud unit (104) and a first end (110) of the coupling nut (108) is restrained by the arrester (104) and a second end (112) of the coupling nut (108) is restricted by the shoulder (106), thereby connecting the convertor unit (100) with the optical fiber hardened connector (50). Further, the body portion (64) that is tubular hollow portion is configured to removably engage with the arrester (102).

Fig. 8 is a pictorial snapshot illustrating a flow chart of a process of connecting the optical fiber hardened connector (50) having the convertor unit (100) connected thereto to an optical fiber terminal (90) in accordance with an embodiment of the present disclosure. The method (300) comprises inserting the shroud (104) into the port (92) of the optical fiber terminal (90); aligning the plurality of shroud fingers (118) with the port channel (94); and connecting the coupling nut (108) with the port (92) of the optical fiber terminal (90).

In accordance with an embodiment of the present disclosure, the optical fiber hardened connector (50) is defined by a diameter D1 and to the port (92) is defined by diameter D2, where D1 / D2 is in the range of 0.4 to 0.75. If the ratio is not falling within the aforesaid range, then the optical fiber hardened connector (50) is not compatible with the port (92). Also, if the ratio goes above 0.6, the convertor unit (100) becomes bulky.

Advantageously, a number of parts of the conversion unit is low, thus, the cost of the conversion unit is low, there is a substantial ease in manufacturing the conversion unit. Also, there is a substantial ease in assembling the convertor unit with the optical fiber hardened connector and time for connecting the convertor unit with the optical fiber hardened connector decreases. Also, an overall time in joining at least one optical fiber with the optical fiber terminal is low.

Another of the advantages of the disclosure is that the crimping portion as well as the boot portion of the optical fiber hardened connector remain undisturbed. Thus, there is no need to make modifications to the optical fiber hardened connector.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A convertor unit (100) for removably engaging an optical fiber hardened connector (50) with an optical fiber terminal (90), where the convertor unit (100) **characterised in that**::
an arrester (102) configured to removably engage with an intermediate portion (52) of the optical fiber hardened connector (50);
a shroud unit (104) is configured to removably engage with the arrester (102) such that the optical fiber hardened connector (50) is at least partially encapsulated by the shroud unit (104),
wherein the shroud unit (104) comprising a shoulder (106); the shroud unit (104) is defined by a shroud length (Ls) and a shroud diameter (Ds); and
a coupling nut (108) slidable over the shroud unit (104) and is defined by a nut length (Ln) and a nut diameter (Dn),
wherein the nut length (Ln) < shroud length (Ls) and nut diameter (Dn) > shroud diameter (Ds),
wherein a first end (110) of the coupling nut (108) being restrained by the arrester (102) and a second end (112) of the coupling nut (108) being restricted by the shoulder (106), thereby keeping a crimping portion (54) and a boot portion (56) of the optical fiber hardened connector (50) undisturbed.

2. The convertor unit (100) as claimed in claim 1, wherein the shroud unit (104) being in the form of a first hollow cylindrical element comprising a first inner surface (114) with a first protruded portion (116),

3. The convertor unit (100) as claimed in claim 2, wherein the first protruded portion (116) being configured to mate with an alignment channel (58) provided on at outer surface (60) of the optical fiber hardened connector (50), thereby restricting relative rotational movement of the shroud unit (104) and the optical fiber hardened connector (50).

4. The convertor unit (100) as claimed in claim 1, wherein the shroud unit (104) comprises a plurality of shroud fingers (118) at a front end of the shroud unit (104).

5. The convertor unit (100) as claimed in claim 4, wherein the plurality of shroud fingers (118) being configured to mate with a plurality of port channel (94) inside the port (92) of the optical fiber terminal (90), thereby enabling alignment between the convertor unit (100) having the optical fiber hardened connector (50) connected thereto and the port (92).

6. The convertor unit (100) as claimed in claim 1, wherein the arrester (102) being in the form of a second hollow cylindrical element comprising a second inner surface (120).

7. The convertor unit (100) as claimed in claim 6, wherein the second inner surface (120) comprising a first twist to lock member (122) for removably connecting to a first counter locking member (62) provided on the outer surface (60) of the optical fiber hardened connector (50).

8. The convertor unit (100) as claimed in claim 7, wherein the first counter locking member (62) provided on an outer surface (60) of the optical fiber hardened connector (50) are in form incomplete threads.

9. The convertor unit (100) as claimed in claim 7, wherein the first twist to lock member (122) being in form of a second protruded portion engages with the incomplete threads and provides a twist to lock mechanism.

10. The convertor unit (100) as claimed in claim 7, wherein the second inner surface (120) of the arrester (102) comprises a second locking member (126) for removably connecting to a second counter locking member (128) provided on a first outer surface (130) of the shroud unit (104).

11. A method (200) of connecting the convertor unit (100) with the optical fiber hardened connector (50), **characterised in that**:
removably engaging (202) the arrester (102) with intermediate portion (52) of the optical fiber hardened connector (50);
sliding (204) the coupling nut (108) over the shroud unit (104); and
removably engaging (206) the shroud unit (104) with the arrester (102) such that the optical fiber hardened connector (50) is at least partially encapsulated by the shroud unit (104) and a first end (110) of the coupling nut (108) is restrained by the arrester (104) and a second end (112) of the coupling nut (108) is restricted by the shoulder (106), thereby connecting the convertor unit (100) with the optical fiber hardened connector (50).

12. The method as claimed in claim 11, wherein the optical fiber hardened connector (50) comprising:
a body portion (64) that is tubular hollow portion configured to removably engage with the arrester (102);
a connecting portion (66) configured to removably engage with the body portion (64); and
an optical fiber plug (68) configured to removably engage with the connecting portion (66) at one end, the optical fiber plug (68) is configured to removably engage with the optical fiber terminal (90) through the convertor unit (100).

13. The method as claimed in claim 11, wherein the coupling nut (108) is defined by a nut length (Ln) and a nut diameter (Dn), and the nut length (Ln) < shroud length (Ls) and nut diameter (Dn) > shroud diameter (Ds).

14. A method (300) of connecting the optical fiber hardened connector (50) having the convertor unit (100) connected thereto to an optical fiber terminal (90), **characterised in that**:
inserting (302) the shroud (104) into the port (92) of the optical fiber terminal (90);
aligning (304) the plurality of shroud fingers (118) with the port channel (94); and
connecting (306) the coupling nut (108) with the port (92) of the optical fiber terminal (90).

15. The method as claimed in claim 14, wherein the optical fiber hardened connector (50) is defined by a diameter D1 and to the port (92) is defined by diameter D2, such that D1 / D2 is in the range of 0.43 to 0.75.
